# EUROPÄISCHE PATENTSCHRIFT

(11) **EP 3 911 861 B1**
(45) Veröffentlichungstag und Bekanntmachung des Hinweises auf die Patenterteilung: **10.07.2024**
(21) Anmeldenummer: 19835426.8
(22) Anmeldetag: 30.12.2019
(51) Int. Cl.: F04F 5/20, F04F 5/46, F04F 5/52, F04F 5/54

(54) **STRAHLPUMPENEINHEIT ZUM STEUERN EINES GASFÖRMIGEN MEDIUMS**
JET PUMP UNIT FOR CONTROLLING A GASEOUS MEDIUM
UNITÉ POMPE À JET CONÇU POUR COMMANDER UN MILIEU GAZEUX

(30) Priorität: 18.01.2019 DE 102019200613
(43) Veröffentlichungstag der Anmeldung: 24.11.2021
(73) Patentinhaber: Robert Bosch GmbH, 70442 Stuttgart (DE)
(72) Erfinder: RICHTER, Armin, 70771 Leinfelden-Echterdingen (DE); MAGEL, Hans-Christoph, 72764 Reutlingen (DE)
(86) Internationale Anmeldenummer: PCT/EP2019/087133
(87) Internationale Veröffentlichungsnummer: WO 2020/148079

(56) Entgegenhaltungen:
- WO-A1-2017/186377
- WO-A1-99/40326
- DE-A1- 102010 043 618
- DE-B3- 102017 212 726
- GB-A- 173 542
- JP-A- 2010 186 730
- US-A1- 2005 044 881
- US-A1- 2014 329 156

## Beschreibung

Die Erfindung betrifft eine Strahlpumpeneinheit zum Steuern eines gasförmigen Mediums, insbesondere Wasserstoff, beispielsweise zur Anwendung in Fahrzeugen mit Brennstoffzellenantrieb.

### Stand der Technik

Die DE 10 2010 043 618 A1 beschreibt ein Dosierventil zum Steuern eines gasförmigen Mediums, insbesondere Wasserstoff, wobei das Dosierventil ein Ventilgehäuse, eine Ejektoreinheit, einen Aktor und ein Schließelement umfasst. In dem Ventilgehäuse ist eine Durchgangsöffnung ausgebildet, welche durch das Schließelement an einem Ventilsitz freigegeben oder verschlossen werden kann. Die Ejektoreinheit umfasst einen Zuströmbereich, welchem ein erstes gasförmiges Medium unter Druck zugeführt wird, einem Ansaugbereich, an welchem ein zweites Medium ansteht und einen Mischrohrbereich, aus welchem ein Gemisch des ersten und des zweiten gasförmigen Mediums austritt. Die Durchgangsöffnung ist zwischen dem Zuströmbereich und dem Ansaugbereich der Ejektoreinheit angeordnet.

Aus der US 2005/044881 A1 ist eine Ejektorpumpendekompressionsvorrichtung für einen Kühlkreis bekannt, die eine Düse enthält. Die Düse dekomprimiert dabei ein aus einem Kältemittelkühler strömendes Kältemittel.

Aus der WO 2017/186377 A1 ist eine Saugstrahlpumpe mit einer in einen Mischkanal mündenden Düsenöffnung und mit einer in den Mischkanal mündenden Ansaugöffnung bekannt.

In der WO 99/40326 A1 ist ein Flüssiggas-Strahlgerät mit einer achsensymmetrischen aktiven Düse und einer Mischkammer gezeigt.

Aus der JP 2010 186730 A ist ein Brennstoffzellensystem bekannt.

Optimierungen von Spülvorgängen in einem Anodenpfad einer Brennstoffzellenanordnung kann durch eine Kombination aus einem Dosierventil und einer Strahlpumpe erzielt werden. Die Einbaulage des Dosierventils in die Strahlpumpe ist jedoch eingeschränkt, da die Strahlpumpe typischerweise parallel zu einer Endplatte des Brennstoffzellenstacks angeordnet ist. Dadurch muss das gasförmige Medium, hier Wasserstoff, das aus der Strahlpumpe in Richtung des Brennstoffzellenstacks strömt, um 90° umgelenkt werden. Durch die Umlenkung kann ein unsymmetrisches Druckfeld in der Strahlpumpe entstehen, was zu einer Beeinträchtigung der Funktionsweise der Strahlpumpe führen kann.

### Vorteile der Erfindung

Die erfindungsgemäße Strahlpumpeneinheit zum Steuern eines gasförmigen Mediums, insbesondere Wasserstoff, weist demgegenüber den Vorteil auf, dass trotz vorbestimmter Einbaulage der Strahlpumpeneinheit eine optimierte Strömung für eine effiziente Funktionsweise der Strahlpumpeneinheit erzielt wird.

Dazu weist die Strahlpumpeneinheit zum Steuern eines gasförmigen Mediums, insbesondere Wasserstoff, eine Düse und eine Mischrohreinheit auf, wobei die Mischrohreinheit eine Längsachse und die Düse eine Längsachse aufweisen. Darüber hinaus weisen die Längsachse der Mischrohreinheit und die Längsachse des Dosierventils einen Winkel α zueinander auf. Dabei weistdie Mischrohreinheit einen Ablaufkanal auf, welcher Ablaufkanal als Querbohrung in einem Pumpengehäuse der Mischrohreinheit ausgebildet ist und so radial zu der Längsachse der Mischrohreinheit angeordnet ist. So kann in einfacher Weise das gasförmige Medium, beispielsweise Wasserstoff, aus der Strahlpumpeneinheit in Richtung einer Brennstoffzelle geleitet werden.

In einer ersten vorteilhaften Weiterbildung ist es vorgesehen, dass der Winkel α zwischen 2° und 5° liegt. Ein optimaler Winkelwertebereich kann mittels numerischer Strömungsmechanik-Berechnungen bzw. der Computational Fluid Dynamics (CFD) Methode ermittelt werden.

In vorteilhafter Weiterbildung ist die Längsachse der Düse entgegen der Richtung des Ablaufkanals in der Mischrohreinheit geneigt. So können Störungen in dem Druckfeld des gasförmigen Mediums minimiert werden. Für weitere Optimierungen des Druckfelds kann die Längsachse der Düse auch noch in eine weitere Richtung geschwenkt sein. So können insbesondere Störungen, welche vom Einlauf der Strahlpumpeneinheit herrühren, ausgeglichen werden.

In weiterer Ausgestaltung der Erfindung ist es vorteilhaft vorgesehen, dass die Mischrohreinheit ein Strömungsleitelement aufweist, welches Strömungsleitelement als Deckelelement an einem Ende der Mischrohreinheit an dem Ablaufkanal ausgebildet und in das Pumpengehäuse integriert ist, wodurch eine Strömung an gasförmigem Medium, vorzugsweise Wasserstoff, in der Mischrohreinheit in Richtung des Ablaufkanals umlenkbar ist. So kann in einfacher Weise das gasförmige Medium, insbesondere Wasserstoff, in Richtung der Brennstoffzelle geleitet werden.

In vorteilhafter Weiterbildung weist die Mischrohreinheit ein Pumpengehäuse auf, in welchem Pumpengehäuse eine stufenförmige Durchgangsbohrung ausgebildet ist, wobei die Düse vollständig in der Durchgangsbohrung der Mischrohreinheit aufgenommen ist. Vorteilhafterweise weist die Düse eine Anformung auf, welche Anformung in einen Ansaugbereich der Mischrohreinheit hineinragt. So kann die Strömung des gasförmigen Mediums innerhalb der Mischrohreinheit optimiert werden.

In weiterer Ausgestaltung der Erfindung ist es vorteilhaft vorgesehen, dass die Düse an einem Dosierventil mit einem Ventilgehäuse angeordnet ist und mit dem Ventilgehäuse fest verbunden ist. Das Dosierventil ermöglicht eine präzise Dosierung an gasförmigem Medium in die Mischrohreinheit und so beispielsweise in einen Anodenbereich einer Brennstoffzelle, so dass eine optimale Funktionsweise des gesamten Systems, beispielsweise des Brennstoffzellensystems erzielbar ist.

In vorteilhafter Weiterbildung ist in der Düse eine Durchlassöffnung des Dosierventils ausgebildet, wobei die Durchlassöffnung in die Durchgangsbohrung mündet. Vorteilhafterweise weist das Dosierventil ein Schließelement mit einem elastischen Dichtelement auf, welches Schließelement mit einem Ventilsitz zum Öffnen und Schließen der Durchlassöffnung zusammenwirkt und an der Düse als Flachsitz ausgebildet ist. Durch die Verwendung eines flachen Ventilsitzes in Kombination eines elastischen Dichtelements zur Abdichtung am Ventilsitz kann in einfacher Weise und ohne große konstruktive Veränderungen die Dichtheit des Dosierventils sichergestellt werden, so dass beispielsweise kein Wasserstoff aus dem Dosierventil austreten kann.

In vorteilhafter Weiterbildung weist das Dosierventil einen Zulaufkanal für das gasförmige Medium auf, wobei der Zulaufkanal zumindest teilweise in dem Pumpengehäuse ausgebildet ist. Vorteilhafterweise weist das Pumpengehäuse der Mischrohreinheit mindestens eine Stufe auf, durch welche mindestens eine Stufe das Dosierventil in dem Pumpengehäuse geführt ist. So kann das Dosierventil in konstruktiv einfacher Weise für eine optimale Funktionsweise in die Mischrohreinheit integriert werden.

Die beschriebene Strahlpumpeneinheit eignet sich vorzugsweise in einer Brennstoffzellenanordnung zum Steuern einer Wasserstoffzufuhr zu einem Anodenbereich einer Brennstoffzelle. Vorteile sind die geringen Druckschwankungen im Anodenpfad und ein leiser Betrieb.

### Zeichnungen

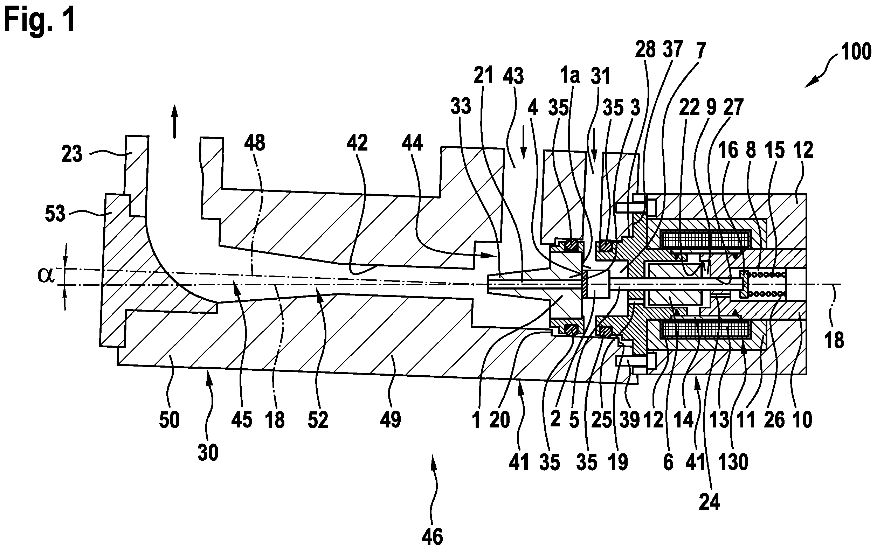

In der Zeichnung sind Ausführungsbeispiele einer erfindungsgemäßen Strahlpumpeneinheit zur Steuerung einer Gaszufuhr, insbesondere Wasserstoff, zu einer Brennstoffzelle, dargestellt. Es zeigt in
- Fig.: ein Ausführungsbeispiel einer erfindungsgemäßen Strahlpumpeneinheit mit einem Dosierventil und einer Mischrohreinheit im Längsschnitt, Beschreibung des Ausführungsbeispiels

**Fig.** zeigt ein Ausführungsbeispiel einer erfindungsgemäßen Strahlpumpeneinheit 46 zur Steuerung eines gasförmigen Mediums, insbesondere Wasserstoff, mit einem Dosierventil 100 und einer Mischrohreinheit 30 im Längsschnitt.

Die Strahlpumpeneinheit 46 weist ein Strahlpumpengehäuse 41 auf, welches ein Pumpengehäuse 49 der Mischrohreinheit 30 und ein Ventilgehäuse 12 des Dosierventils 100 umfasst.

In dem Ventilgehäuse 12 des Dosierventils 100 ist ein Innenraum 26 ausgebildet, in dem ein Elektromagnet 130 angeordnet ist, welcher eine Magnetspule 13, einen Innenpol 10 und einen Außenpol 11 umfasst. Der Innenpol 10 ist dabei mit dem Ventilgehäuse 12 über ein Distanzbuchsenelement 14 aus nicht magnetischen Material verbunden.

Weiterhin ist in einem von dem Innenraum 26 umfassten Ankerraum 9 ein hubbeweglicher Magnetanker 6 mit einem stiftförmigen Element 5 angeordnet, wobei das stiftförmige Element 5 fest mit dem Magnetanker 6 verbunden ist und sowohl in einer Ausnehmung 27 des Innenpols 10 als auch in einer Ausnehmung 28 des Ventilgehäuses 12 aufgenommen und geführt ist. Der Magnetanker 6 ist als Tauchanker ausgebildet und wird bei dessen Hubbewegung in einer Ausnehmung 22 des Innenpols 10 aufgenommen.

Das Ventilgehäuse 12 und der Innenpol 10 begrenzen einen Federraum 8, in welchen ein tellerförmiges Ende 16 des stiftförmigen Elements 5 des Magnetankers 6 hineinragt. An dem tellerförmigen Ende 16 des stiftförmigen Elements 5 stützt sich eine Schließfeder 15 ab, durch welche der Magnetanker 6 mit dem stiftförmigen Element 5 vorgespannt ist. Das der Schließfeder 15 abgewandte Ende des stiftförmigen Elements 5 ist fest mit einem ebenen Schließelement 2 verbunden. Das Schließelement 2 weist an seinem dem stiftförmigen Element 5 abgewandten Ende ein elastisches Dichtelement 3 auf und ist in einem Zulaufbereich 7 des Dosierventils 100 angeordnet. Der Federraum 8 und der Ankerraum 9 sind über einen ersten Verbindungskanal 24 und der Ankerraum 9 und der Zulaufbereich 7 über einen zweiten Verbindungskanal 25 fluidisch miteinander verbunden.

Radial zu einer Längsachse 18 des Dosierventils 100 sind Zulaufkanäle 31 in dem Ventilgehäuse 12 ausgebildet, durch welche der Zulaufbereich 7 des Dosierventils 100 mit gasförmigem Medium befüllbar ist. Der Zulaufbereich 7 ist neben dem Ventilgehäuse 12 von einer Düse 1 begrenzt, welche eine Anformung 33 aufweist, in der eine stufenförmige Durchlassöffnung 21 ausgebildet ist. An einer dem elastischen Dichtelement 3 zugewandten radial zu der Längsachse 18 des Dosierventils 100 angeordneten Sitzfläche 1a der Düse 1 ist eine umlaufende Dichtkante ausgebildet, an der ein Ventilsitz 4 ausgebildet ist. In einer geschlossenen Position des Dosierventils 100 liegt das elastische Dichtelement 3 durch die Kraftbeaufschlagung der Schließfeder 15 an dem Ventilsitz 4 an, so dass eine Verbindung zwischen dem Zulaufbereich 7 und der Durchlassöffnung 21 geschlossen ist.

Die Mischrohreinheit 30 weist das Pumpengehäuse 49 mit einer Längsachse 48 auf. In dem Pumpengehäuse 49 ist axial zu der Längsachse 48 eine teilweise stufenförmig und teilweise konisch ausgebildete Durchgangsbohrung 42 ausgebildet. Radial zu der Längsachse 48 ist in dem Pumpengehäuse 49 der Zulaufkanal 31 des Dosierventils 100 und ein Ansaugkanal 43 ausgebildet.

Weiterhin sind in der Durchgangsbohrung 42 ein Ansaugbereich 44, ein Mischrohrbereich 52 und an einem Ende 50 der Mischrohreinheit 30 ein Ablaufbereich 45 ausgebildet. An diesem Ende 50 ist radial zu der Längsachse 48 der Mischrohreinheit 30 ein Ablaufkanal 23 ausgebildet, der beispielsweise zur Wasserstoffversorgung mit einer Brennstoffzelle einer Brennstoffzellenanordnung verbunden ist. Außerdem ist an dem Ende 50 ein Strömungsleitelement 53, ausgebildet als Deckelelement, angeordnet und in das Pumpengehäuse 49 integriert. Dadurch ist das gasförmige Medium in der Durchgangsbohrung 42 in Richtung des Ablaufkanals 23 umlenkbar.

Das Dosierventil 100 ist in einer Öffnung des Pumpengehäuses 49 teilweise aufgenommen. Dabei ist das Ventilgehäuse 12 mit einer Stufe 37 an dem Pumpengehäuse 49 angeordnet und mittels Schraubenelementen 39 fest mit diesem verbunden. Weiterhin sind an dem Ventilgehäuse 12 Dichtungselemente 35 angeordnet, so dass das Ventilgehäuse 12 und das Pumpengehäuse 49 gegeneinander abgedichtet sind. Gasförmiges Medium aus dem Zulaufkanal 31 gelangt so nur über die Durchlassöffnung 21 in Richtung des Ansaugbereichs 44.

Des Weiteren weist das Pumpengehäuse 49 eine erste Stufe 19 und eine zweite Stufe 20 auf, durch welche das Dosierventil 100 und dessen Düse 1 in dem Pumpengehäuse 49 geführt sind und so die Düse 1 vor dem Mischrohrbereich 52 optimal ausgerichtet ist. So können die Lagetoleranzen des Dosierventils 100, vor allem der Düse 1, gegenüber dem Pumpengehäuse 49 im Zusammenspiel mit der ersten Stufe 19 und der zweiten Stufe 20 minimiert werden.

Das Dosierventil 100 wird hier nicht koaxial in die Mischrohreinheit 30 integriert, sondern die Längsachse 18 des Dosierventils 100 und die Längsachse 48 der Mischrohreinheit 30 weisen einen Winkel α auf mit einem Wertebereich zwischen 2° und 5°. Dabei ist die Längsachse 18 des Dosierventils 100 entgegen der Richtung des Ablaufkanals 23 in der Mischrohreinheit 30 geneigt.

Die Funktionsweise der Strahlpumpeneinheit ist wie folgt:
Das Dosierventil 100 ist hier als Proportionalventil ausgebildet. Bei nicht bestromter Magnetspule 13 wird das Schließelement 2 über die Schließfeder 15 an den Ventilsitz 4 gedrückt, so dass die Verbindung zwischen dem Zulaufbereich 7 und der Durchlassöffnung 21 unterbrochen ist und kein Gasdurchfluss erfolgt.

Wird die Magnetspule 13 bestromt, so wird eine magnetische Kraft auf den Magnetanker 6 erzeugt, welcher der Schließkraft der Schließfeder 15 entgegengerichtet ist. Diese magnetische Kraft wird über das stiftförmige Element 5 auf das Schließelement 2 übertragen, so dass die Schließkraft der Schließfeder 15 überkompensiert wird und das Schließelement 2 vom Ventilsitz 4 abhebt. Ein Gasdurchfluss aus dem Zulaufbereich 7 in Richtung der Durchlassöffnung 21 ist freigegeben.

Der Hub des Schließelements 2 kann über die Höhe der Stromstärke an der Magnetspule 13 eingestellt werden. Je höher die Stromstärke an der Magnetspule 13, desto größer ist der Hub des Schließelements 2 und desto höher ist auch der Gasdurchfluss im Dosierventil 100, da die Kraft der Schließfeder 15 hubabhängig ist. Wird die Stromstärke an der Magnetspule 13 reduziert, wird auch der Hub des Schließelements 2 reduziert und somit der Gasdurchfluss gedrosselt.

Wird der Strom an der Magnetspule 13 unterbrochen, wird die magnetische Kraft auf den Magnetanker 6 abgebaut, so dass die Kraft auf das Schließelement 2 mittels des stiftförmigen Elements 5 reduziert wird. Das Schließelement 2 bewegt sich in Richtung der Durchlassöffnung 21 und dichtet mit dem elastischen Dichtelement 3 an dem Ventilsitz 4 ab. Der Gasdurchfluss im Dosierventil 100 ist unterbrochen.

Bei geöffnetem oder teilgeöffnetem Ventilsitz 4 des Dosierventils 100 strömt über den Ventilsitz 4 aus dem Zulaufkanal 31 des Dosierventils 100 gasförmiges Medium, hier Wasserstoff, aus dem Tank in die Durchlassöffnung 21 in der Düse 1. Dieser Wasserstoff strömt über die Düse 1 in die Durchgangsbohrung 42 des Pumpengehäuses 49 ein. Nach Eintritt in die Durchgangsbohrung 42 trifft der Wasserstoff in dem Ansaugbereich 44 auf gasförmiges Medium, welches der Brennstoffzelle bereits zugeführt, jedoch nicht verbraucht wurde, und über den Ansaugkanal 43 zurück in die Strahlpumpeneinheit 46 geführt wurde. Das zurückgeführte gasförmige Medium umfasst hauptsächlich Wasserstoff, aber auch Wasserdampf und Stickstoff. In dem Mischrohrbereich 52 wird durch Impulsaustausch der gasförmigen Medien ein Massenstrom aus dem Ansaugbereich 44 angesaugt und in Richtung Ablaufbereich 45 und Ablaufkanal 23 und somit in Richtung einem Anodenbereich der Brennstoffzelle gefördert. Je nach Geometrie der Durchgangsbohrung 42 und dem Winkel α zwischen der Längsachse 18 des Dosierventils 100 und der Längsachse 48 der Mischrohreinheit 30 kann eine bedarfsgerechte Einstellung der der Brennstoffzelle zugeführten Gasströmung erfolgen.

In einer alternativen Ausführungsform ist es auch möglich, dass das Dosierventil 100 nicht wie im obigen Ausführungsbeispiel gezeigt, in die Mischrohreinheit 30 integriert ist, sondern beispielsweise über eine Kanalverbindung mit der Mischrohreinheit 30 verbunden ist. So ist das Dosierventil 100 nicht auf die Mischrohreinheit 30 geschraubt. Die Düse 1 ist hierbei jedoch weiterhin in der Mischrohreinheit 30 an der gleichen Position angeordnet und mit der Mischrohreinheit 30 fest verbunden.

## Patentansprüche

1. Strahlpumpeneinheit (46) zum Steuern eines gasförmigen Mediums, insbesondere Wasserstoff, mit einer Düse (1) und einer Mischrohreinheit (30), wobei die Mischrohreinheit (30) eine Längsachse (48) und die Düse (1) eine Längsachse (18) aufweisen, wobei die Längsachse (48) der Mischrohreinheit (48) und die Längsachse (18) der Düse (1) einen Winkel (α) zueinander aufweisen, **dadurch**
**gekennzeichnet, dass** die Mischrohreinheit (30) einen Ablaufkanal (23) aufweist, welcher Ablaufkanal (23) als Querbohrung in einem Pumpengehäuse (49) der Mischrohreinheit (30) ausgebildet ist und so radial zu der Längsachse (48) der Mischrohreinheit (30) angeordnet ist, wobei die Längsachse (18) der Düse (1) entgegen der Richtung des Ablaufkanals (23) in der Mischrohreinheit (30) geneigt ist.

2. Strahlpumpeneinheit (46) nach Anspruch 1, **dadurch gekennzeichnet, dass** der Winkel (α) zwischen 2° und 5° liegt.

3. Strahlpumpeneinheit (46) nach Anspruch 1, **dadurch gekennzeichnet, dass** die Mischrohreinheit (30) ein Strömungsleitelement (53) aufweist, welches Strömungsleitelement (53) als Deckelelement an einem Ende (50) der Mischrohreinheit (30) an dem Ablaufkanal (23) ausgebildet und in das Pumpengehäuse (49) integriert ist, wodurch eine Strömung an gasförmigem Medium, vorzugsweise Wasserstoff, in der Mischrohreinheit (30) in Richtung des Ablaufkanals (23) umlenkbar ist.

4. Strahlpumpeneinheit (46) nach einem der vorhergehenden Ansprüche, **dadurch gekennzeichnet, dass** die Mischrohreinheit (30) ein Pumpengehäuse (49) aufweist, in welchem Pumpengehäuse (49) eine stufenförmige Durchgangsbohrung (42) ausgebildet ist, wobei die Düse (1) vollständig in der Durchgangsbohrung (42) der Mischrohreinheit (30) aufgenommen ist.

5. Strahlpumpeneinheit (46) nach einem der vorhergehenden Ansprüche, **dadurch gekennzeichnet, dass** die Düse (1) eine Anformung (33) aufweist, welche Anformung (33) in einen Ansaugbereich (44) der Mischrohreinheit (30) hineinragt.

6. Strahlpumpeneinheit (46) nach Anspruch 4, **dadurch gekennzeichnet, dass** die Düse (1) an einem Dosierventil (100) mit einem Ventilgehäuse (12) angeordnet ist und mit dem Ventilgehäuse (12) fest verbunden ist.

7. Strahlpumpeneinheit (46) nach dem vorhergehenden Anspruch, **dadurch gekennzeichnet, dass** in der Düse (1) eine Durchlassöffnung (21) des Dosierventils (100) ausgebildet ist, wobei die Durchlassöffnung (21) in die Durchgangsbohrung (42) mündet.

8. Strahlpumpeneinheit (46) nach Anspruch 6 oder 7, **dadurch gekennzeichnet, dass** das Dosierventil (100) ein Schließelement (2) mit einem elastischen Dichtelement (3) aufweist, welches Schließelement (2) mit einem Ventilsitz (4) zum Öffnen und Schließen der Durchlassöffnung (21) zusammenwirkt und an der Düse (1) als Flachsitz ausgebildet ist.

9. Strahlpumpeneinheit (46) nach einem der Ansprüche 6, 7 oder 8, **dadurch gekennzeichnet, dass** das Dosierventil (100) einen Zulaufkanal (31) für das gasförmige Medium aufweist, wobei der Zulaufkanal (31) zumindest teilweise in dem Pumpengehäuse (49) ausgebildet ist.

10. Strahlpumpeneinheit (46) nach einem der Ansprüche 6, 7, 8 oder 9, **dadurch gekennzeichnet, dass** das Pumpengehäuse (49) der Mischrohreinheit (30) mindestens eine Stufe (19, 20) aufweist, durch welche mindestens eine Stufe (19, 20) das Dosierventil (100) in dem Pumpengehäuse (49) geführt ist.

11. Brennstoffzellenanordnung mit einer Strahlpumpeneinheit (46) zum Steuern einer Wasserstoffzufuhr zu einer Brennstoffzelle nach einem der vorhergehenden Ansprüche.

## Claims

1. Jet pump unit (46) for controlling a gaseous medium, in particular hydrogen, with a nozzle (1) and with a mixing tube unit (30), wherein the mixing tube unit (30) has a longitudinal axis (48) and the nozzle (1) has a longitudinal axis (18), wherein the longitudinal axis (48) of the mixing tube unit (48) and the longitudinal axis (18) of the nozzle (1) are at an angle (α) to one another, **characterized in that** the mixing tube unit (30) has an outflow channel (23), which outflow channel (23) is in the form of a transverse bore in a pump housing (49) of the mixing tube unit (30) and is in this way arranged radially with respect to the longitudinal axis (48) of the mixing tube unit (30), wherein the longitudinal axis (18) of the nozzle (1) is inclined away from the direction of the outflow channel (23) in the mixing tube unit (30).

2. Jet pump unit (46) according to Claim 1, **characterized in that** the angle (α) lies between 2° and 5° .

3. Jet pump unit (46) according to Claim 1, **characterized in that** the mixing tube unit (30) has a flow-guiding element (53), which flow-guiding element (53) is in the form of a cover element at an end (50) of the mixing tube unit (30) at the outflow channel (23) and is integrated into the pump housing (49), whereby a flow of gaseous medium, preferably hydrogen, in the mixing tube unit (30) is able to be diverted into the direction of the outflow channel (23).

4. Jet pump unit (46) according to one of the preceding claims, **characterized in that** the mixing tube unit (30) has a pump housing (49), in which pump housing (49) a stepped passage bore (42) is formed, wherein the nozzle (1) is received fully in the passage bore (42) of the mixing tube unit (30).

5. Jet pump unit (46) according to one of the preceding claims, **characterized in that** the nozzle (1) has a protuberance (33), which protuberance (33) projects into an intake region (44) of the mixing tube unit (30).

6. Jet pump unit (46) according to Claim 4, **characterized in that** the nozzle (1) is arranged on a dosing valve (100) with a valve housing (12) and is connected fixedly to the valve housing (12).

7. Jet pump unit (46) according to the preceding claim, **characterized in that** a passage opening (21) of the dosing valve (100) is formed in the nozzle (1), wherein the passage opening (21) opens out into the passage bore (42) .

8. Jet pump unit (46) according to Claim 6 or 7, **characterized in that** the dosing valve (100) has a closure element (2) with an elastic sealing element (3), which closure element (2) interacts with a valve seat (4) for opening and closing the passage opening (21) and is in the form of a flat seat at the nozzle (1).

9. Jet pump unit (46) according to one of Claims 6, 7 and 8, **characterized in that** the dosing valve (100) has an inflow channel (31) for the gaseous medium, wherein the inflow channel (31) is formed at least partially in the pump housing (49).

10. Jet pump unit (46) according to one of Claims 6, 7, 8 and 9, **characterized in that** the pump housing (49) of the mixing tube unit (30) has at least one step (19, 20), by way of which at least one step (19, 20) the dosing valve (100) is guided in the pump housing (49).

11. Fuel cell arrangement with a jet pump unit (46) for controlling a supply of hydrogen to a fuel cell according to of the preceding claims.

## Revendications

1. Unité de pompe à jet (46) pour commander un milieu gazeux, notamment de l'hydrogène, avec une buse (1) et une unité de tube de mélange (30), l'unité de tube de mélange (30) présentant un axe longitudinal (48) et la buse (1) un axe longitudinal (18), l'axe longitudinal (48) de l'unité de tube de mélange (48) et l'axe longitudinal (18) de la buse (1) présentant un angle (α) l'un par rapport à l'autre, **caractérisée en ce que** l'unité de tube de mélange (30) présente un canal d'évacuation (23), lequel canal d'évacuation (23) est réalisé sous forme d'alésage transversal dans un boîtier de pompe (49) de l'unité de tube de mélange (30) et est ainsi agencé radialement par rapport à l'axe longitudinal (48) de l'unité de tube de mélange (30), l'axe longitudinal (18) de la buse (1) étant incliné à l'opposé de la direction du canal d'évacuation (23) dans l'unité de tube de mélange (30).

2. Unité de pompe à jet (46) selon la revendication 1, **caractérisée en ce que** l'angle (α) est compris entre 2° et 5°.

3. Unité de pompe à jet (46) selon la revendication 1, **caractérisée en ce que** l'unité de tube de mélange (30) présente un élément de guidage d'écoulement (53), lequel élément de guidage d'écoulement (53) est réalisé sous forme d'élément de couvercle à une extrémité (50) de l'unité de tube de mélange (30) au niveau du canal d'évacuation (23) et est intégré dans le boîtier de pompe (49), moyennant quoi un écoulement de milieu gazeux, de préférence d'hydrogène, peut être dévié dans l'unité de tube de mélange (30) en direction du canal d'évacuation (23) .

4. Unité de pompe à jet (46) selon l'une quelconque des revendications précédentes, **caractérisée en ce que** l'unité de tube de mélange (30) présente un boîtier de pompe (49), dans lequel boîtier de pompe (49) est réalisé un alésage traversant étagé (42), la buse (1) étant entièrement reçue dans l'alésage traversant (42) de l'unité de tube de mélange (30).

5. Unité de pompe à jet (46) selon l'une quelconque des revendications précédentes, **caractérisée en ce que** la buse (1) présente une formation (33), laquelle formation (33) faisant saillie dans une zone d'aspiration (44) de l'unité de tube de mélange (30).

6. Unité de pompe à jet (46) selon la revendication 4, **caractérisée en ce que** la buse (1) est agencée sur une soupape de dosage (100) avec un boîtier de soupape (12) et est reliée de manière fixe au boîtier de soupape (12).

7. Unité de pompe à jet (46) selon la revendication précédente, **caractérisée en ce qu'**un orifice de passage (21) de la soupape de dosage (100) est réalisé dans la buse (1), l'orifice de passage (21) débouchant dans l'alésage traversant (42).

8. Unité de pompe à jet (46) selon la revendication 6 ou 7, **caractérisée en ce que** la soupape de dosage (100) présente un élément de fermeture (2) avec un élément d'étanchéité élastique (3), lequel élément de fermeture (2) coopère avec un siège de soupape (4) pour ouvrir et fermer l'orifice de passage (21) et est réalisé sous forme de siège plat sur la buse (1).

9. Unité de pompe à jet (46) selon l'une quelconque des revendications 6, 7 ou 8, **caractérisée en ce que** la soupape de dosage (100) présente un canal d'amenée (31) pour le milieu gazeux, le canal d'amenée (31) étant réalisé au moins partiellement dans le boîtier de pompe (49) .

10. Unité de pompe à jet (46) selon l'une quelconque des revendications 6, 7, 8 ou 9, **caractérisée en ce que** le boîtier de pompe (49) de l'unité de tube de mélange (30) présente au moins un étage (19, 20), par lequel au moins un étage (19, 20) la soupape de dosage (100) est guidée dans le boîtier de pompe (49).

11. Agencement de pile à combustible avec une unité de pompe à jet (46) pour commander une amenée d'hydrogène vers une pile à combustible selon l'une quelconque des revendications précédentes.
